# EUROPEAN PATENT SPECIFICATION

(11) **EP 3 315 742 B1**
(45) Date of publication and mention of the grant of the patent: **25.11.2020**
(21) Application number: 17199313.2
(22) Date of filing: 31.10.2017
(51) Int. Cl.: F02C 6/18, F01K 23/10, F02C 7/224

(54) **FUEL HEATING SYSTEM USING STEAM AND WATER IN SINGLE FUEL HEAT EXCHANGER**
BRENNSTOFFHEIZSYSTEM MIT DAMPF UND WASSER IN EINEM EINZIGEN BRENNSTOFFWÄRMETAUSCHER
SYSTÈME DE CHAUFFAGE DE CARBURANT UTILISANT DE LA VAPEUR ET DE L'EAU DANS UN SEUL ÉCHANGEUR DE CHALEUR POUR CARBURANT

(30) Priority: 01.11.2016 US 201615340516
(43) Date of publication of application: 02.05.2018
(73) Proprietor: General Electric Company, Schenectady, NY 12345 (US)
(72) Inventor: ERICKSON, Dean Matthew, Greenville, SC South Carolina 29615 (US); CONGER, Kyle Joseph, Greenville, SC South Carolina 29615 (US); KINDEL, David Michael, Greenville, SC South Carolina 29615 (US); ROMAN, Carlos Gabriel, Greenville, SC South Carolina 29615 (US)
(74) Representative: BRP Renaud & Partner mbB Rechtsanwälte Patentanwälte Steuerberater

(56) References cited:
- EP-A2- 2 388 456
- US-A- 4 099 374
- US-A1- 2012 067 055
- US-A1- 2015 345 401

## Description

### BACKGROUND OF THE INVENTION

The disclosure relates generally to turbomachinery control systems, and more particularly, to a fuel heating system using water and steam in a single fuel heat exchanger, and a related power generating system and method.

Gas turbine systems are used in a wide variety of industrial settings such as power generation. Gas turbines use combusted fuel to drive a gas turbine to generate power. During various operating conditions of gas turbine systems, the fuel is desired to be heated. For example, gas turbine systems may require heating the fuel for startup conditions and/or high load conditions of the gas turbine. "Startup" refers to conditions when the gas turbine is being started, and "high load" refers to conditions when the gas turbine is operating at a high power output capacity. Current systems utilize two independent and separate heat exchangers to support fuel heating: one for start-up conditions and one for high load conditions. A first heat exchanger arrangement may include an auxiliary steam boiler to heat a feedwater supply that is then directed to a heat exchanger for the fuel for supporting start-up fuel heating. This first heat exchanger arrangement is typically used when hot water is not otherwise readily available, e.g., prior to startup of a heat recover steam generator (HRSG) coupled to an exhaust of the gas turbine. A separate, second heat exchanger arrangement utilizes heated feedwater that is directed to a conventional shell and tube heat exchanger for start-up fuel heating and high load fuel heating. Both arrangements use water exclusively for the fuel heating concept.

EP2388456 (A2) discloses a system for pre-heating fuel in a power plant and method for assembling. US2015345401 (A1) discloses systems and methods for preheating fuel in a gas turbine engine. US2012067055 (A1) discloses a system for addressing various thermal management issues in advanced gas turbine engines.

### BRIEF DESCRIPTION OF THE INVENTION

A first aspect of the disclosure provides a fuel heating system according to claim 1 for a gas turbine system, the fuel heating system comprising: a boiler for generating steam; a heat recovery steam generator (HRSG) independent of the boiler; a single fuel heat exchanger including a first passage for fluidly communicating a fuel therethrough and a second passage in thermal communication with the first passage for fluidly communicating a heating medium therethrough to heat the fuel, the single heat exchanger structured to operate using steam or water as the heating medium; and a control valve system fluidly interconnecting the HRSG, the boiler and the single fuel heat exchanger and configured to selectively deliver the heating medium to the second passage of the single fuel heat exchanger as one of: the steam from the boiler and the hot feedwater from the HRSG.

A second aspect of the disclosure provides a power generating system according to claim 9.

A third aspect, not claimed, of the disclosure provides a method for heating a fuel for a gas turbine system, the method comprising: generating steam with a boiler; generating a hot feedwater; and heating the fuel by: in a startup condition of the gas turbine system in which the hot feedwater is not yet available, delivering the steam from the boiler through a fuel heat exchanger that includes a first passage for fluidly communicating the fuel therethrough and a second passage in thermal communication with the first passage for fluidly communicating the steam therethrough, and in response to the hot feedwater becoming available, stopping the delivery of the steam and delivering the hot feedwater through the second passage of the same, single fuel heat exchanger.

The illustrative aspects of the present disclosure are designed to solve the problems herein described and/or other problems not discussed.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 shows a schematic diagram of a power generating system including a fuel heating system according to embodiments of the disclosure.
FIG. 2 shows an exploded perspective view of one example of a fuel heat exchanger capable of use according to embodiments of the disclosure.

It is noted that the drawings of the disclosure are not to scale. The drawings are intended to depict only typical aspects of the disclosure, and therefore should not be considered as limiting the scope of the disclosure. In the drawings, like numbering represents like elements between the drawings.

### DETAILED DESCRIPTION OF THE INVENTION

As an initial matter, in order to clearly describe the current disclosure it will become necessary to select certain terminology when referring to and describing relevant machine components within a power generating plant. When doing this, if possible, common industry terminology will be used and employed in a manner consistent with its accepted meaning. Unless otherwise stated, such terminology should be given a broad interpretation consistent with the context of the present application and the scope of the appended claims. Those of ordinary skill in the art will appreciate that often a particular component may be referred to using several different or overlapping terms. Excepting fuel heat exchanger 150, what may be described herein as being a single part may include and be referenced in another context as consisting of multiple components. Alternatively, what may be described herein as including multiple components may be referred to elsewhere as a single part.

The disclosure provides embodiments of a fuel heating system, a power generating system including the fuel heating system and a method. In contrast to conventional fuel heating approaches, systems and methods according to embodiments of the disclosure provide a single fuel heat exchanger that is capable of heating the fuel with water or steam. During a startup condition, steam may be used from a boiler to heat the fuel, and once hot feedwater from a heat recovery steam generator (HRSG) coupled to an exhaust of a gas turbine is available, hot feedwater from the HRSG can be used to heat the fuel using the same fuel heat exchanger.

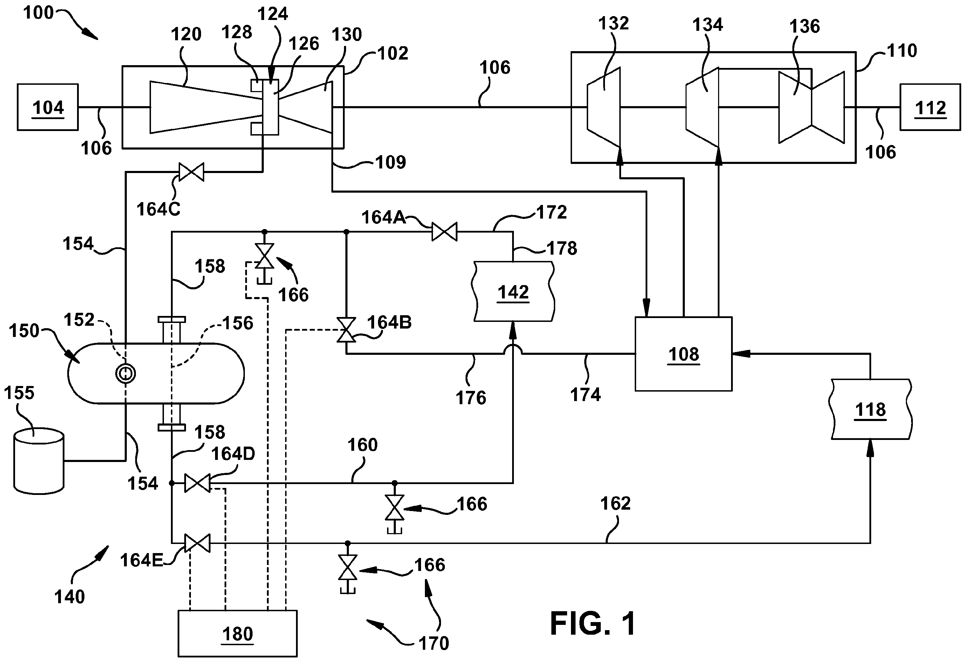

Turning to FIG. 1, a schematic diagram of a power generating system 100 including a fuel heating system 140 according to embodiments of the disclosure is shown. In the instant example, power generating system 100 includes a single shaft system with two generators, but one with skill in the art will readily understand that the teachings of the disclosure are applicable to any variety of combined cycle power generating system. Combined cycle power generating system 100 may include a gas turbine system 102 operably connected to a generator 104, and a steam turbine system 110 operably coupled to gas turbine system 102 and perhaps another generator 112. Generator 104 and gas turbine system 102 may be mechanically coupled by a shaft 106, which may transfer energy between a drive shaft (not shown) of gas turbine system 102 and generator 104. Similarly, generator 112 and steam turbine system 110 may be mechanically coupled by shaft 106, which may transfer energy between a drive shaft (not shown) of steam turbine system 110 and generator 112. It is understood that generators 104, 112 and shaft 106 may be of any size or type known in the art and may differ depending upon their application or the system to which they are connected. Common numbering of the generators and shafts is for clarity and does not necessarily suggest these generators or shafts are identical.

Gas turbine system 102 may include a compressor 120 and a combustor 124. Combustor 124 includes a combustion region 126 and a fuel nozzle assembly 128 for creating a hot gas flow by combusting air from the compressor and a fuel 154. Gas turbine system 102 also includes a gas turbine 130 for expanding the hot gas flow received from combustor 124, and driving rotation of shaft 106. In one embodiment, gas turbine system 102 is a MS9001FB engine, sometimes referred to as a 9FB engine, commercially available from General Electric Company. The present disclosure is not limited to any one particular gas turbine system and may be implanted in connection with other engines including, for example, the MS7001FA (7FA) and MS9001FA (9FA) engine models of General Electric Company. In operation, air enters the inlet of compressor 120, is compressed and then discharged to combustor 124 where fuel 154, which is heated according to embodiments of the disclosure, is burned to provide high energy combustion gases which drive gas turbine 130. Fuel 154 may include a gas, e.g., natural gas, or a liquid, e.g., oil, gasoline, etc. In gas turbine 130, the energy of the hot gases is converted into work, some of which is used to drive compressor 120 through rotating shaft 106, with the remainder available for useful work to drive a load such as generator 104 for producing electricity.

FIG. 1 also represents the combined cycle in its simplest form in which the energy in the exhaust gases exiting gas turbine 130 are converted into additional useful work. For example, a energy may be used to generate hot feedwater, i.e., at heat recovery steam generator (HRSG) 108. HRSG 108 is operably coupled to gas turbine system 102 and steam turbine system 110. HRSG 108 may be fluidly connected to both gas turbine system 102 and steam turbine system 110 via conventional conduits (numbering omitted). HRSG 108 may include a conventional HRSG, such as those used in conventional combined cycle power systems. As understood, exhaust gases 109 of gas turbine 130 enter HRSG 108 in which water is converted to steam for steam turbine system 110 and/or hot feedwater 174, the use of which will be described herein.

Steam turbine system 110 may include one or more steam turbines, e.g., as shown, a high pressure (HP) turbine 132, an intermediate pressure (IP) turbine 134 and/or a low pressure (LP) turbine 136, each of which are operatively coupled to shaft 106. That is, each steam turbine 132, 134, 136 includes a plurality of rotating blades (not shown) mechanically coupled to shaft 106. In operation, steam from HRSG 108 enters an inlet of HP turbine 132, IP turbine 134 and/or LP turbine 136, and is channeled to impart a force on blades thereof causing shaft 106 to rotate. As understood, steam used in an upstream turbine may be employed in a downstream turbine. The steam thus produced by HRSG 108 drives at least a part of steam turbine system 110 in which additional work is extracted to drive shaft 106 and an additional load such as second generator 112 which, in turn, produces additional electric power. In some configurations, turbines 130, 132, 134, 136 drive a common generator.

FIG. 1 also shows a fuel heating system 140 for gas turbine system 102 according to embodiments of the disclosure. Fuel heating system 140 includes a boiler 142 for generating steam. Boiler 142 may include any now known or later developed boiler capable of creating a steam flow. Boiler 142 may be a separate (auxiliary) boiler or may be part of a larger boiler system. Fuel heating system 140 also includes HRSG 108 independent of boiler 142. HRSG 108 is operably coupled to gas turbine 130. As used herein, "hot feedwater" indicates water having a temperature in a non-limiting example range of, e.g., 230 to 260 °C.

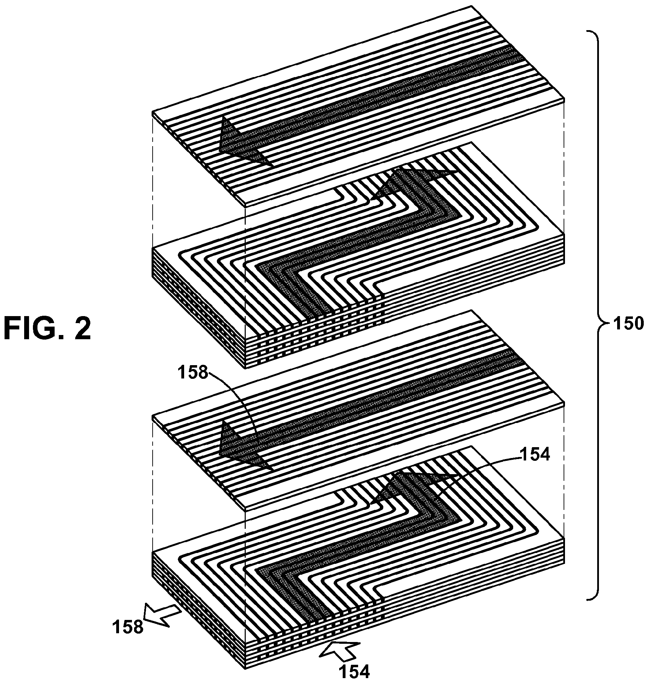

As shown in FIG. 1, fuel heating system 140 also includes a single fuel heat exchanger 150 including a first passage 152 for fluidly communicating a fuel 154 therethrough and a second passage 156 in thermal communication with first passage 152 for fluidly communicating a heating medium 158 therethrough to heat fuel 154. As used in the setting of heat exchanger 150, "passage" may include any form of circuit, conduit, tube, channel, pathway, etc., through which a gas or liquid can pass. In accordance with embodiments of the disclosure, in contrast to conventional fuel heating systems, only one, i.e., a single, fuel heat exchanger 150 is provided. Fuel heat exchanger 150 can include any now known or later developed heat exchanger structured to operate using either steam or water as the heating medium. In one embodiment, fuel heat exchanger 150 may include a printed circuit heat exchanger (PCHE). FIG. 2 shows an exploded perspective view of one example of fuel heat exchanger 150 in the form of a PCHE. As shown in FIG. 2, a PCHE may include a number of stacked plates, each plate with conduits in a surface thereof. The plates are stacked and sealed together, and fluids flow in alternating directions within the stack of plates to transfer thermal energy between fluids therein. Where a PCHE is used, it may be any appropriate model available from, for example, Heatric UK of Dorset, UK and Alfa Laval AB of Skäne, Sweden. It is emphasized that a PCHE is just one example of a form of heat exchanger capable of use according to embodiments of the disclosure. Alternatively, fuel heat exchanger 150 may include any now known or later developed heat exchanger capable of handling both steam and hot water such as but not limited to: brazed plate heat exchangers, fusion-bonded plate heat exchangers, gasketed plate-and-frame heat exchangers, plate and shell heat exchangers, plate-and-block heat exchangers, spiral heat exchangers, welded plate-and-frame heat exchangers, or tube array heat exchangers. Fuel 154 may be provided from any now known or later developed fuel source(s) 155, e.g., pipeline(s), tank(s), etc.

Fuel heating system 140 may also include any variety of return passages for the heating medium 158, i.e., steam or water. In one embodiment, fuel heating system 140 may include a condensate return passage 160 fluidly communicating condensate from fuel heat exchanger 150 from steam to boiler 142. Further, fuel heating system may also include a return passage 162 fluidly communicating used feedwater from fuel heat exchanger 150 to steam turbine condenser 118 for steam turbine system 110. The return passages 160, 162 are just examples of possible collection passages that may be employed. The water collected can be re-used in or directed to a wide variety of alternative sub-systems. Return passages 160, 162 may include any necessary control valves 164, and may include drain ports 166 (e.g., with own valves) to allow for redirection of the heating medium to a drain.

Fuel heating system 140 also includes a control valve system 170 fluidly interconnecting HRSG 108, boiler 142 and fuel heat exchanger 150 and configured to selectively deliver heating medium 158 to second passage 156 of fuel heat exchanger 150 as one of: steam 172 from boiler 142 and hot feedwater 174 from HRSG 108. As illustrated, control valve system 170 includes: at least one control valve 164 configured to control flow of steam 172 and hot feedwater 174, e.g., control valves 164 in conduits 176 and 178, among other control valves. When utilizing steam from boiler 142, valve 164A in conduit 178 is open and valve 164B in conduit 176 is closed. The valve states are reversed when operating with feedwater from HRSG 108, i.e., valve 164A is closed and valve 164B is open. Control valve system 170 may be manually controlled, or in one embodiment, may be computer controlled. In the latter case, control valve system 170 may also include a controller 180 configured to operate at least one control valve 164. Control valve 164C may be used to control flow of fuel to combustor 124. Control valve 164D modulates steam/condensate flow when utilizing auxiliary steam from HRSG 108 for fuel heating, and control valve 164E modulates flow to control fuel temperature when utilizing steam from boiler 142. Steam/condensate in return passage 160 can be returned to boiler 142 or dumped to a drain. Other control valves 164 may also be employed, where necessary.

As will be appreciated by one skilled in the art, controller 180 may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, controller 180 may take the form of a computer program product embodied in any tangible medium of expression having computer-usable program code embodied in the medium. In one embodiment, controller 180 may be a separate computerized system from that which controls the rest of combined cycle power generating system 100; however, controller 180 may be incorporated in the computerized control system(s) of power generating system 100 in any now known or later developed fashion, e.g., as an additional software program product. As understood, any form of sensor required to identify stream or water flows, control valve settings, steam or water conditions, etc., can be employed in a known fashion with controller 180.

A method according to embodiments of the disclosure may include boiler 142 generating steam 172, i.e., in a known fashion, and HRSG 108 generating hot feedwater 174 in a known fashion, i.e., once gas turbine 130 generates exhaust sufficient for HRSG 108 to create hot feedwater 174. In operation, controller 180 may function to: in a startup condition of gas turbine 130 in which hot feedwater, e.g., from HRSG 108 is not (yet) available, deliver steam 172 from boiler 142 to fuel heat exchanger 150, i.e., second passage 156. That is, controller 180 may open control valve(s) 164, e.g., in conduit 178, to allow flow of steam 172 to fuel heat exchanger 150. In this setting, steam 172 heats fuel 154 prior to its delivery to combustor 124 of gas turbine system 102, e.g., to a temperature of 93 to 204 °C. Further, controller 180, in response to hot feedwater 174 becoming available, e.g., from HRSG 108, may stop delivery of steam 172, e.g., by closing control valve(s) 164 in conduit, and deliver hot feedwater 174 from HRSG 108 to fuel heat exchanger 150, i.e., second passage 156. Here, controller 180 may open control valve(s) 164 in conduit 176. In this fashion, as gas turbine 130 becomes operational and is not expelling exhaust capable of generating sufficiently hot feedwater from HRSG 108, gas turbine system 102 can still operate with heated fuel 154. Once gas turbine 130 becomes operational and is expelling exhaust to generate sufficiently hot feedwater 174 from HRSG 108, gas turbine 130 can operate with sufficiently heated fuel 154, e.g., to a temperature of 93 to 204 °C.

In contrast to conventional systems, embodiments of the disclosure use a single fuel heat exchanger 150 to heat fuel 154 (gas or liquid) with two different heating mediums 158, i.e., hot feedwater 174 or steam 172. Hence, embodiments of the disclosure provide a simplified system, with commensurate lower cost to build and maintain, and with a smaller footprint of hardware.

Many modifications and variations will be apparent to those of ordinary skill in the art without departing from the scope of the invention as defined in the appended claims.

## Claims

1. A fuel heating system (140) for a gas turbine system (102), the fuel heating system (140) comprising:
a boiler (142) for generating steam (172);
a heat recovery steam generator (HRSG) (108) independent of the boiler (142);
a single fuel heat exchanger (150) including a first passage for fluidly communicating a fuel (154) therethrough and a second passage (156) in thermal communication with the first passage for fluidly communicating a heating medium (158) therethrough to heat the fuel (154), the single fuel heat exchanger (150) structured to operate using steam (172) or water as the heating medium (158); and
a control valve system (170) fluidly interconnecting the HRSG (108), the boiler (142) and the single fuel heat exchanger (150) and configured to selectively deliver the heating medium (158) to the second passage (156) of the single fuel heat exchanger (150) as one of: the steam (172) from the boiler (142) and the hot feedwater (174) from the HRSG (108).

2. The fuel heating system (140) of claim 1, wherein the single fuel heat exchanger (150) includes a printed circuit heat exchanger (150) (PCHE).

3. The fuel heating system (140) of claim 1 or 2, further comprising a condensate return passage (160, 162) fluidly communicating condensate from the single fuel heat exchanger (150) from the steam (172) to the boiler (142).

4. The fuel heating system (140) of claim 1, 2 or 3, wherein the HRSG (108) is operatively coupled to the gas turbine system (102).

5. The fuel heating system (140) of claim 4, further comprising a return passage (160, 162) fluidly communicating the hot feedwater (174) from the single fuel heat exchanger (150) to a boiler (142) for a steam turbine system (110).

6. The fuel heating system (140) of any preceding claim, wherein the control valve system (170) includes:
at least one control valve (164, 164A, 164B, 164C, 164D, 164E) configured to control flow of the steam (172) and the hot feedwater (174) to the second passage (156); and
a controller (180) configured to operate the at least one control valve (164, 164A, 164B, 164C, 164D, 164E) to: in a startup condition of the gas turbine (130) in which the hot feedwater (174) is not available, deliver the steam (172) from the boiler (142) to the second passage (156), and, in response to the hot feedwater (174) becoming available, stop delivery of the steam (172) and deliver the hot feedwater (174) from the HRSG (108) to the second passage (156).

7. The fuel heating system (140) of any preceding claim, wherein the fuel (154) is a gas.

8. The fuel heating system (140) of any of claims 1 to 6, wherein the fuel (154) is a liquid.

9. A power generating system (100), comprising:
a gas turbine system (102) including a compressor, a combustor (124) creating a hot gas flow by combusting air from the compressor and a fuel (154), and a gas turbine (130) for expanding the hot gas flow received from the combustor (124); and
a fuel heating system (140) of any of claims 1 to 8; wherein
the HRSG (108) is operably coupled to an exhaust of the gas turbine (130) for creating a hot feedwater (174).

10. The power generating system (100) of claim 9, wherein the single fuel heat exchanger (150) includes a printed circuit heat exchanger (150) (PCHE).

## Patentansprüche

1. Brennstoffheizsystem (140) für ein Gasturbinensystem (102), wobei das Brennstoffheizsystem (140) umfasst:
einen Kessel (142) zum Erzeugen von Dampf (172);
einen vom Kessel (142) unabhängigen Wärmerückgewinnungs-Dampferzeuger (HRSG) (108);
einen einzigen Brennstoffwärmetauscher (150) mit einem ersten Durchgang, um einen Brennstoff (154) fluidtechnisch dadurch hindurch zu leiten, und einen zweiten Durchgang (156) in Wärmeverbindung mit dem ersten Durchgang, um ein Heizmedium (158) fluidtechnisch dadurch hindurch zu leiten, um den Brennstoff (154) zu erwärmen, wobei der einzige Brennstoffwärmetauscher (150) dazu ausgelegt ist, unter Verwendung von Dampf (172) oder Wasser als das Heizmedium (158) zu arbeiten; und
ein Steuerventilsystem (170), das den HRSG (108), den Kessel (142) und den einzigen Brennstoffwärmetauscher (150) fluidtechnisch verbindet und dazu konfiguriert ist, das Heizmedium (158) selektiv als eins von: dem Dampf (172) aus dem Kessel (142) und dem heißen Speisewasser (174) vom HRSG (108) zu dem zweiten Durchgang (156) des einzigen Brennstoffwärmetauschers (150) zu leiten.

2. Brennstoffheizsystem (140) nach Anspruch 1, wobei der einzige Brennstoffwärmetauscher (150) einen Wärmetauscher mit gedruckter Schaltung (150)(PCHE) einschließt.

3. Brennstoffheizsystem (140) nach Anspruch 1 oder 2, ferner umfassend einen Kondensatrücklaufdurchgang (160, 162), der Kondensat aus dem einzigen Brennstoffwärmetauscher (150) fluidtechnisch vom Dampf (172) zum Kessel (142) leitet.

4. Brennstoffheizsystem (140) nach Anspruch 1, 2 oder 3, wobei der HRSG (108) in Wirkbeziehung an das Gasturbinensystem (102) gekoppelt ist.

5. Brennstoffheizsystem (140) nach Anspruch 4, ferner umfassend einen Rücklaufdurchgang (160, 162), der das heiße Speisewasser (174) fluidtechnisch von dem einzigen Brennstoffwärmetauscher (150) zu einem Kessel (142) für ein Dampfturbinensystem (110) leitet.

6. Brennstoffheizsystem (140) nach einem der vorstehenden Ansprüche, wobei das Steuerventilsystem (170) einschließt:
mindestens ein Steuerventil (164, 164A, 164B, 164C, 164D, 164E), das dazu konfiguriert ist, die Strömung des Dampfes (172) und des heißen Speisewassers (174) zu dem zweiten Durchgang (156) zu steuern; und
eine Steuerung (180), die dazu konfiguriert ist, das mindestens eine Steuerventils (164, 164A, 164B, 164C, 164D, 164E) zu betreiben, um: in einem Anlaufzustand der Gasturbine (130), in dem das heiße Speisewasser (174) nicht verfügbar ist, den Dampf (172) aus dem Kessel (142) an den zweiten Durchgang (156) abzugeben und, in Reaktion darauf, dass das heiße Speisewasser (174) verfügbar wird, das Zuführen des Dampfes (172) anzuhalten und das heiße Speisewasser (174) von dem HRSG (108) an den zweiten Durchgang (156) abzugeben.

7. Brennstoffheizsystem (140) nach einem der vorstehenden Ansprüche, wobei der Brennstoff (154) ein Gas ist.

8. Brennstoffheizsystem (140) nach einem der Ansprüche 1 bis 6, wobei der Brennstoff (154) eine Flüssigkeit ist.

9. Stromerzeugungssystem (100), umfassend:
ein Gasturbinensystem (102), einschließlich eines Verdichters, einer Brennkammer (124), die durch Verbrennen von Luft aus dem Verdichter und einem Brennstoff (154) einen Heißgasstrom erzeugt, und einer Gasturbine (130) zum Ausdehnen des von der Brennkammer (124) aufgenommenen Heißgasstroms; und
ein Brennstoffheizsystem (140) nach einem der Ansprüche 1 bis 8; wobei
der HRSG (108) in Wirkbeziehung an einen Auslass der Gasturbine (130) gekoppelt ist, um ein heißes Speisewasser (174) zu erzeugen.

10. Stromerzeugungssystem (100) nach Anspruch 9, wobei der einzige Brennstoffwärmetauscher (150) einen Wärmetauscher mit gedruckter Schaltung (150) (PCHE) einschließt.

## Revendications

1. Système de chauffage de carburant (140) pour un système de turbine à gaz (102), le système de chauffage de carburant (140) comprenant :
une chaudière (142) pour générer de la vapeur (172) ;
un générateur de vapeur de récupération de chaleur (HRSG) (108) indépendant de la chaudière (142) ;
un échangeur de chaleur à carburant unique (150) incluant un premier passage pour communiquer fluidiquement un carburant (154) à travers celui-ci et un second passage (156) en communication thermique avec le premier passage pour communiquer fluidiquement un milieu de chauffage (158) à travers celui-ci pour chauffer le carburant (154), l'échangeur de chaleur à carburant unique (150) étant structuré pour fonctionner en utilisant de la vapeur (172) ou de l'eau en tant que milieu de chauffage (158) ; et
un système de soupape de commande (170) interconnectant fluidiquement le HRSG (108), la chaudière (142) et l'échangeur de chaleur à carburant unique (150) et configuré pour délivrer sélectivement le milieu de chauffage (158) au second passage (156) de l'échangeur de chaleur à carburant unique (150) comme l'une parmi : la vapeur (172) de la chaudière (142) et l'eau d'alimentation chaude (174) du HRSG (108).

2. Système de chauffage de carburant (140) selon la revendication 1, dans lequel l'échangeur de chaleur à carburant unique (150) inclut un échangeur de chaleur à circuit imprimé (150) (PCHE).

3. Système de chauffage de carburant (140) selon la revendication 1 ou 2, comprenant en outre un passage de retour de condensat (160, 162) communiquant fluidiquement le condensat de l'échangeur de chaleur à carburant unique (150) de la vapeur (172) à la chaudière (142).

4. Système de chauffage de carburant (140) selon la revendication 1, 2 ou 3, dans lequel le HRSG (108) est couplé de manière opérationnelle au système de turbine à gaz (102).

5. Système de chauffage de carburant (140) selon la revendication 4, comprenant en outre un passage de retour (160, 162) communiquant fluidiquement l'eau d'alimentation chaude (174) de l'échangeur de chaleur à carburant unique (150) à une chaudière (142) pour un système de turbine à vapeur (110).

6. Système de chauffage de carburant (140) selon une quelconque revendication précédente, dans lequel le système de soupape de commande (170) inclut :
au moins une soupape de commande (164, 164A, 164B, 164C, 164D, 164E) configurée pour commander l'écoulement de la vapeur (172) et de l'eau d'alimentation chaude (174) vers le second passage (156) ; et
un contrôleur (180) configuré pour actionner l'au moins une soupape de commande (164, 164A, 164B, 164C, 164D, 164E) afin de : dans une condition de démarrage de la turbine à gaz (130) dans laquelle l'eau d'alimentation chaude (174) n'est pas disponible, délivrer la vapeur (172) de la chaudière (142) au second passage (156), et, en réponse à l'eau d'alimentation chaude (174) devenant disponible, arrêter la distribution de la vapeur (172) et délivrer l'eau d'alimentation chaude (174) du HRSG (108) au second passage (156).

7. Système de chauffage de carburant (140) selon une quelconque revendication précédente, dans lequel le carburant (154) est un gaz.

8. Système de chauffage de carburant (140) selon l'une quelconque des revendications 1 à 6, dans lequel le carburant (154) est un liquide.

9. Système de génération d'énergie (100), comprenant :
un système de turbine à gaz (102) incluant un compresseur, une chambre de combustion (124) créant un écoulement de gaz chaud en procédant à la combustion de l'air provenant du compresseur et un carburant (154), et une turbine à gaz (130) pour dilater l'écoulement de gaz chaud reçu de la chambre de combustion (124) ; et
un système de chauffage de carburant (140) selon l'une quelconque des revendications 1 à 8 ; dans lequel
le HRSG (108) est couplé de manière opérationnelle à un échappement de la turbine à gaz (130) pour créer une eau d'alimentation chaude (174).

10. Système de génération d'énergie (100) selon la revendication 9, dans lequel l'échangeur de chaleur à carburant unique (150) inclut un échangeur de chaleur à circuit imprimé (150) (PCHE).
